# EUROPEAN PATENT APPLICATION

(11) **EP 2 316 796 A2**
(43) Date of publication of application: **04.05.2011**
(21) Application number: 10173503.3
(22) Date of filing: 20.08.2010
(51) Int. Cl.: C02F 1/44, A47J 31/60, B01D 61/12

(54) **System for filtering water for apparatuses intended for producing beverages**

(30) Priority: 23.10.2009 IT MI20090338 U
(71) Applicant: Fluid-O-Tech S.r.l., 20094 Corsico (MI) (IT)
(72) Inventor: Mantica, Aldo, 26013, Crema CR (IT); Andreis, Vittorio, 20146, Milano MI (IT)
(74) Representative: Coletti, Raimondo

(57) **Abstract**

A system (26) for filtering water for an apparatus (10) intended for the production of beverages (24) is described. The apparatus (10) comprises one or more pumps (12), able to draw the water necessary for preparing the beverage (24) from the mains water supply or from a suitable tank (14), and a piping system (16) capable of sending pressurised water, through the pump or the pumps (12), to at least one preparing device capable of adding a soluble substance to the water to obtain the beverage (24). The filtering system (26) comprises at least one semipermeable membrane (28) arranged along the piping system (16) and downstream of the pump or of the pumps (12). The pump or the pumps (12) are capable of directly supplying the filtering system (26) with mains water at a predetermined pressure, at least equal and opposite to the osmotic pressure, to produce purified water having characteristics suitable for preparing the beverage (24). The pump or the pumps (12) can be of the positive displacement, rotary or vane pump type, of the type with internal or external gears, or of the electromagnetic vibratory type or of the diaphragm type.

## Description

The present finding refers to a system for filtering water for apparatuses intended for the production of hot or cold beverages, preferably but not exclusively for apparatuses for producing coffee.

As it is known, apparatuses for producing hot beverages and infusions, like for example coffee, comprise a boiler for heating water coming from a pump, so as to obtain hot water and/or steam to be sent directly, or through a heat exchanger, to at least one housing (called dispenser group), in which the substance (coffee, herbal tea or other), to be added to the hot water and/or to the steam so as to obtain the desired beverage, is contained.

After using the apparatus for producing beverages for a long time, however, limescale, bacteria proliferations, mould deposits or deposits of other suspended substances can form in the boiler, in the heat exchangers and in the water transport ducts that, as well as not being hygienic, also negatively modify the taste of the beverage to be prepared.

To this day, almost all of the producers of apparatuses for producing beverages have tackled the problem of treating water almost exclusively for avoiding limescale in heat exchangers and in boilers. In such apparatuses, the water is indeed heated up to over 110°C and the limescale, especially when the water is particularly hard, can cause serious damage to the apparatuses themselves.

The most common system used today for neutralising limescale in apparatuses for producing hot beverages is based upon the principle of water softening through strong cation ion exchange resins. These resins generally consist of polymer granules, having a diameter of between 0.8 mm and 1.2 mm, of a copolymer of styrol with divinylbenzol. It is thus sufficient to make the water flow into a filter with such resins inside it, to exchange the calcium and the magnesium contained in the water itself with sodium. The water thus treated no longer contains calcium and magnesium, but only sodium and, consequently, there will no longer be the problem of the formation and precipitation of calcium carbonate (CaC0₃). However, after such a treatment, all the remaining chemical substances present in the water, including the polluting substances, remain unvaried. Moreover, in order for the softening process to take effect, the polymer resins must periodically be regenerated with sodium chloride. If this operation is not carried out automatically by the apparatus (through automatic softeners), it can be tiresome since it must be carried out directly by the user of the apparatus for producing beverages.

More recently, some new resins of the weak cation type in acid form have been introduced in the field of apparatuses for producing beverages. These resins are "decarbonation" resins, which means that they remove the hardness of the water related to the bicarbonates (temporary hardness). These release hydrogen ions (H⁺) and capture calcium and magnesium cations (Ca²⁺; Mg²⁺) bonded to the bicarbonates present in the water.

These cation resins are not however capable of eliminating the hardness related to chlorides, sulphates and nitrates. Consequently, such resins still leave a certain degree of hardness and the acidity of the water tends to increase, with consequent problems of aggressiveness towards the metal components that are used in the apparatuses. Moreover, the regeneration of these resins can occur only with the addition of a strong acid in excess, like for example hydrochloric acid (HCl), and therefore the regeneration operation must be carried out at specialised centres. These cation resins in most cases foresee the use of cartridges, that must be replaced periodically by a user of the apparatus for producing beverages.

The general purpose of the present finding is therefore that of making a system for filtering water for apparatuses intended for the production of hot or cold beverages, preferably but not exclusively for apparatuses for producing coffee, that is capable of solving the aforementioned drawbacks of the prior art in an extremely simple, cost-effective and particularly functional manner.

In particular, one purpose of the present finding is that of making a system for filtering water for apparatuses intended for the production of hot or cold beverages that is capable not only of reducing the hardness and the salinity of the water, but is also capable of eliminating all undesired substances from the water itself, including pollutants, thanks to the use of the supply pump belonging to the apparatus.

Another purpose of the finding is that of making a system for filtering water for apparatuses intended for the production of hot or cold beverages that does not require any type of specific maintenance, including the regeneration and/or the replacement of the cartridges.

These and other purposes according to the present finding are achieved by making a system for filtering water for apparatuses intended for the production of hot or cold beverages, preferably but not exclusively for apparatuses for producing coffee, as outlined in claim 1.

Further characteristics of the finding are highlighted in the dependent claims, that are an integral part of the present description.

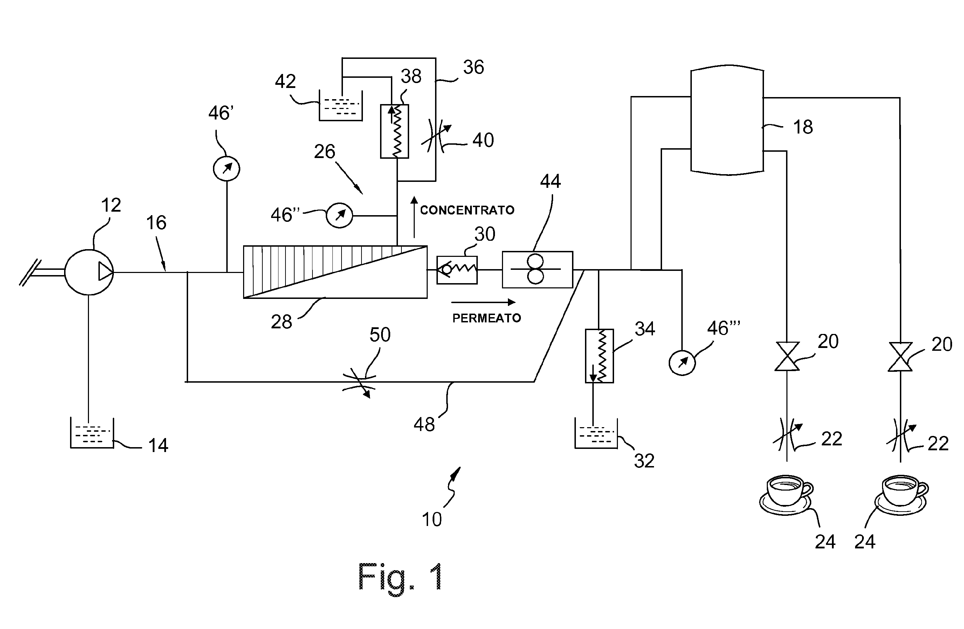

The characteristics and the advantages of a system for filtering water for apparatuses intended for the production of hot or cold beverages according to the present finding shall become clearer from the following description, given as an example and not for limiting purposes, with reference to the attached drawings in which the single figure is an entirely schematic view illustrating the fundamental components of such a system for filtering water for apparatuses intended for the production of hot or cold beverages.

With reference to the figure, it schematically shows, the essential elements of a generic apparatus intended for the production of typically hot beverages, like coffee for example. The apparatus is wholly indicated with reference numeral 10 and it is provided with a system 26 for filtering water according to the finding, as shall be better specified in the rest of the description.

First of all, the apparatus 10 comprises one or more pumps 12 able to draw the water, necessary for preparing the beverage, from the mains water supply or from a suitable tank 14. In the embodiment illustrated in the figure, showing an apparatus 10 suitable for the preparation of hot beverages, the pressurised water is then sent by the pump 12, through a piping system 16, to a boiler 18, or to another analogous heating means, capable of increasing the temperature of the water itself to a desired value, typically up to more than 110°C in apparatuses for producing coffee. The water thus heated is finally sent, again by means of the pump 12 and preferably through suitable valves 20 and bidirectional flow regulators 22, to at least one preparing device (not shown) capable of adding the desired soluble substance (coffee, herbal tea or other) to the hot water itself, so as to obtain the hot beverage 24.

Alternatively to what has been outlined thus far, the apparatus 10 may also not be provided with the boiler 18 or with other analogous heating means, if it is exclusively intended for preparing cold beverages 24, without for this reason departing from the scope of protection of the present finding.

The apparatus 10, along the piping system 16 and downstream of the pump 12, is provided with a water filtering system 26 based upon the process of reverse osmosis. Such a process is generated naturally between two solutions having different concentration, separated by a semipermeable membrane 28 that is capable of making the water pass but not the salts contained in it. The pressure developed on the semipermeable membrane 28 is defined as osmotic pressure. Thanks to the pump 12, by applying a pressure at least equal and opposite to the osmotic pressure, the process is reversed and water having very low salinity is produced from water with higher concentration. In other words, the same pump 12 that operates for the production of the beverage inside the apparatus 10 is also capable of directly supplying the filtering system 26 with mains water at a predetermined pressure.

In detail, the semipermeable membrane 28 of the filtering system 26 consists of at least one nanofiltration membrane, contained in a suitable casing or vessel and arranged along the piping system 16 for the circulation of water thanks to the pump 12. For the sake of hygiene and durability, the casing or vessel of the nanofiltration membrane 28 can be manufactured in stainless steel or in a suitable technopolymer. The nanofiltration membrane 28, which receives mains water at a predetermined pressure thanks to the pump 12, is therefore capable of producing purified water having characteristics that are suitable for the preparation of an excellent beverage 24, since it maintains a certain salt content inside the water itself, while protecting the circuits and the functional elements of the apparatus 10 at the same time.

The pressurised water purified by the filtering system 26 is sent, in the form of "permeate" and through one or more check valves 30, directly to the boiler 18 or to the devices for preparing the beverage 24 through the piping system 16. In addition, all or part of the purified water can be sent, for its subsequent use, to a storing tank 32 arranged upstream of the boiler 18 and hydraulically connected to the piping system 16 through a pressure adjustment valve 34.

The part of water containing the undesired substances, also in pressure and usually called "concentrate", is on the other hand expelled from the piping system 16 through a suitable duct 36, along which a pressure adjustment valve 38 and a bidirectional flow regulator 40 can be foreseen, to be stored in a tank 42 for the "concentrate".

The check valve 30, the pressure adjustment valves 34 (for the "permeate") and 38 (for the "concentrate") and the relative hydraulic connections thus collectively form a system for adjusting the pressure of water in outlet from the filtering system 26, that operates for the calibration and the adjustment of the filtering system 26 itself. Such a pressure adjusting system, subdivided by components in the figure for the sake of clarity of representation, can be integrated in the pump 12 or in the vessel of the nanofiltration membrane 28, more precisely in the relative closing lid.

As previously mentioned, the water pressure necessary for the correct operation of the nanofiltration membrane 28 is directly provided by the pump 12 also used for filling the boiler 18 and for the infusion of the beverage 24. Based upon technical tests, it has been possible to verify that, by providing the piping system 16 with suitable valves 20 and with one or more check valves 30, the dynamics of the pressure of the water circulating inside the apparatus 10 is suitable both for the good operation of the nanofiltration membrane 28, as well as for the normal operation of the apparatus 10 itself.

The pump 12 can be of the positive displacement, rotary or vane pump type, of the type with internal or external gears, of the electromagnetic vibratory type, of the diaphragm type or other. The displacement of the pump 12 can vary according to the specific applications. The pump 12 can be provided with a flow adjustment valve, either balanced (adjusting) or simple (by-pass), it can be actuated by a "brushless" motor, using direct current or of the type with an inverter, it can be equipped with a dynamic system for adjusting the number of revolutions, or by an induction motor of the conventional type, with a set number of revolutions, and it can moreover be of the directly coupled or magnetic drive pump type.

The filtering system 26 can be provided with a device (not shown) for detecting the electric conductivity of the water circulating along the piping system 16. This detection device, consisting, for example, of a conductivity meter, operates for controlling the conductivity of the water produced by the filtering system 26 according to the mineral salts dissolved in it, in any case providing a measurement that identifies the overall quality of the water in outlet from the nanofiltration membrane 28. The conductivity meter, foreseen in the closing lid of the vessel of the nanofiltration membrane 28, is a sensor that must be managed by an electronic card: such a card could be integrated in the conventional electronic diagnostic system of the apparatus 10, or operate autonomously.

Completing the filtering system 26 of the apparatus 10, there is a volumetric meter 44, arranged downstream of the nanofiltration membrane 28 and that is suitable for measuring the amount of water introduced into the piping system 16, and a plurality of pressure measuring devices (manometers) 46', 46'' and 46''', capable of detecting the instantaneous pressure value of the water in the various areas of the piping system 16 itself.

Finally it is foreseen for there to be the possibility of modifying the quality of the water in outlet from the nanofiltration membrane 28 through a suitable by-pass circuit 48 of the nanofiltration membrane 28 itself. The by-pass circuit 48 can be equipped with a proportional control valve 50 (manual or fedback by the signal suitably processed by the electronics of the conductivity meter, i.e. through ion-selective sensors), and can be used in the case in which the apparatus 10 is operating in areas in which the conductivity of the water is already near to the desired value or, alternatively, to modify such a value of conductivity according to the needs. The apparatus 10 would in this case mix, unfiltered water, sent by the pump 12 through the by-pass circuit 48, with the permeate in outlet from the nanofiltration membrane 28.

It has thus been seen that the system for filtering the water for apparatuses intended for the production of hot or cold beverages according to the present finding achieves the purposes previously highlighted, in particular obtaining the following advantages:
- there is no need for any unit outside the apparatus to provide for filtering the water;
- no need for regeneration;
- continuous use and no need for maintenance;
- total elimination of encrustation problems;
- production of water with constant characteristics even when the characteristics of the water introduced into the apparatus vary;
- production of fresh water with low salinity;
- production of water without pollutants or bacteria loads;
- possibility of producing an excellent beverage even with brackish water or having high content of pollutants;
- production of pH neutral water, therefore having no interaction with the metal parts of the apparatus;
- flexibility of the filtering system, i.e. the possibility of adapting the system itself to all the most common types of apparatuses for the production of beverages.

The system for filtering water for apparatuses intended for the production of hot or cold beverages of the present finding thus conceived can in any case undergo numerous modifications and variants, all covered by the same innovative concept; moreover, all the details can be replaced by technically equivalent elements. In practice the materials used, as well as the shapes and dimensions, can be any according to the technical requirements.

The scope of protection of the finding is thus defined by the attached claims.

## Claims

1. System (26) for filtering water for an apparatus (10) intended for the production of beverages (24), the apparatus (10) being of the type comprising one or more pumps (12), capable of drawing the water necessary for preparing the beverage (24) from the mains water supply or from a suitable tank (14), and a piping system (16) capable of sending pressurised water, through said one or more pumps (12), to at least one preparing device capable of adding a soluble substance to said water to obtain the beverage (24), said filtering system (26) comprising at least one semipermeable membrane (28) arranged along said piping system (16) and downstream of said one or more pumps (12), **characterised in that** said one or more pumps (12) are capable of directly supplying said filtering system (26) with mains water at a predetermined pressure, at least equal and opposite to the osmotic pressure, to produce purified water having characteristics that are suitable for preparing said beverage (24), said one or more pumps (12) being selected from the group made up of:
- positive displacement, rotary or vane pumps;
- internal or external gear pumps;
- electromagnetic vibratory pumps;
- diaphragm pumps.

2. Filtering system (26) according to claim 1, **characterised in that** said one or more pumps (12) can be each equipped with a flow adjustment valve, either balanced (modulator) or simple (by-pass).

3. Filtering system (26) according to claim 1 or 2, **characterised in that** said one or more pumps (12) can each be actuated by a brushless motor, using direct current or of the type with an inverter, equipped with a dynamic system for adjusting the number of revolutions, or by an induction motor of the conventional type, with a set number of revolutions.

4. Filtering system (26) according to any one of the previous claims, **characterised in that** said one or more pumps (12) can each be of the directly coupled type or of the magnetic drive pump type.

5. Filtering system (26) according to any one of the previous claims, **characterised in that** said semipermeable membrane (28) consists of a nanofiltration membrane contained in a suitable casing manufactured in stainless steel or in a suitable technopolymer.

6. Filtering system (26) according to claim 5, **characterised in that** it comprises one or more check valves (30), one or more pressure adjustment valves (34; 38) and the relative hydraulic connections that collectively form a system for adjusting the pressure of water in outlet from said filtering system (26), said system for adjusting the pressure operating for the calibration and the adjustment of said filtering system (26).

7. Filtering system (26) according to claim 6, **characterised in that** said system for adjusting the pressure is integrated in said one or more pumps (12) or in the casing of said nanofiltration membrane (28).

8. Filtering system (26) according to claims 6 or 7, **characterised in that** it comprises a duct (36) for expelling the part of water containing the undesired substances, along said duct (36) being foreseen one of said pressure adjustment valves (38) and a bidirectional flow regulator (40) .

9. Filtering system (26) according to any one of claims from 5 to 8, **characterised in that** it comprises a device for detecting the electric conductivity of the water circulating along said piping system (16), said detection device operating to control the conductivity of the water produced by said filtering system (26) according to the mineral salts dissolved in it.

10. Filtering system (26) according to claim 9, **characterised in that** said detection device is a conductivity meter integrated in the conventional electronic diagnostic system of said apparatuses (10) or in the casing of said nanofiltration membrane (28).

11. Filtering system (26) according to any one of claims from 5 to 10, **characterised in that** it comprises a volumetric meter (44), arranged downstream of said semipermeable membrane (28) and suitable for measuring the amount of water introduced into said piping system (16), and a plurality of pressure measuring devices (46', 46'' and 46'''), capable of detecting the instantaneous pressure value of the water in the various areas of said piping system (16).

12. Filtering system (26) according to any one of claims from 5 to 11, **characterised in that** it comprises a by-pass circuit (48) of said semipermeable membrane (28), equipped with a proportional control valve (50), said by-pass circuit (48) being capable of supplying unfiltered water, to be mixed with water in outlet from said filtering system (26), to said device for preparing the beverage (24).
